# EUROPEAN PATENT SPECIFICATION

(11) **EP 3 374 671 B1**
(45) Date of publication and mention of the grant of the patent: **17.03.2021**
(21) Application number: 16797459.1
(22) Date of filing: 09.11.2016
(51) Int. Cl.: F16H 61/662, F16H 63/06, F16H 55/56

(54) **HYDRAULICALLY ADJUSTABLE PULLEY DEVICE FOR A CONTINUOUSLY VARIABLE TRANSMISSION**
HYDRAULISCH VERSTELLBARE RIEMENSCHEIBENVORRICHTUNG FÜR EIN STUFENLOSES GETRIEBE
DISPOSITIF DE POULIE RÉGLABLE HYDRAULIQUEMENT POUR UNE TRANSMISSION VARIABLE EN CONTINU

(30) Priority: 09.11.2015 NL 1041562
(43) Date of publication of application: 19.09.2018
(73) Proprietor: Robert Bosch GmbH, 70442 Stuttgart (DE)
(72) Inventor: TOTTÉ, Timo, 5521 NC Eersel (NL); WEETERINGS, Kilian, Cornelis, Josephus, Maria, 5000 AM Tilburg (NL); KRAUTER, Lothar, 574321 Bietigheim-Bissingen (DE); WETZEL, Gerhard, 70825 Korntal-Münchingen (DE)
(74) Representative: Plevier, Gabriël Anton Johan Maria
(86) International application number: PCT/EP2016/025139
(87) International publication number: WO 2017/080676

(56) References cited:
- EP-A1- 2 722 562
- WO-A1-2012/131965
- WO-A1-2015/146616
- WO-A2-03/106866
- JP-A- H04 165 156
- JP-A- H10 324 177
- JP-A- 2001 324 009
- JP-A- 2005 226 802

## Description

The present disclosure relates to a hydraulically adjustable pulley device for a continuously variable transmission, as defined in the preamble of the claim 1 hereinafter. Such a pulley and transmission are generally known in the art, for example from WO2015/146616. European patent publications EP 1 303 715 A1 and EP 1 470 350 A1 also disclose some of the features of the preamble of claim 1.

The known continuously variable transmission includes two pulleys, i.e. both a primary or driving pulley coupled to an engine and a secondary or driven pulley coupled to a load, in particular to the driven wheels of a motor vehicle. Each such pulley comprises two (frusto-)conical discs arranged on a shaft and hydraulically operable adjustment means that serve to mutually urge the discs towards each other in axial direction. A drive belt, such as a metal push belt, a metal drive chain or a fibre-reinforced rubber pull belt, is wrapped around the pulleys, located (in part) between the discs thereof. During operation of the transmission and by the actuation of the pulley adjustment means, the drive belt is clamped between the two discs of both pulleys such that rotation force can be transmitted from the one pulley to the other one pulley. Also by means of the pulley adjustment means, in particular by the clamping force that is respectively exerted thereby on the belt at each pulley, a radius of curvature of the drive belt at each pulley, between the discs thereof, is controlled. In turn, these radii of curvature, in particular by the ratio there between, determine a speed ratio and a torque ratio of the transmission, which ratios can thus be controlled to an arbitrary value within a range of ratios determined by the transmission design through an appropriate actuation of the pulley adjustment means.

In the known transmission, each pulley adjustment means comprises a piston/cylinder-assembly, whereof the piston is fixed to the pulley shaft and whereof the cylinder contains the piston in radial direction and is fixed to an axial side of a first pulley disc opposite the other, second pulley disc, which first pulley disc is mounted axially movable by being provided with a sleeve that is fitted around the pulley shaft. By applying a hydraulic pressure in the cylinder, i.e. in the cylinder chamber between the piston and the said first pulley discs, from a source external to the pulleys, this first pulley disc is urged in axial direction towards the second pulley disc, such that the drive belt is clamped there between. Inter alia it is noted that such first, i.e. axially moveable pulley disc is locked to the pulley shaft in tangential direction, i.e. the direction of rotation thereof, typically by means of a key-groove or spline connection.

In the above-described, known transmission some leakage of hydraulic fluid disadvantageously, but unavoidably occurs therein in the hydraulic connection between the said external source and the rotating cylinder chamber of each pulley. In the art, technical solutions have been proposed to reduce such leakage and thus to favourably reduce a loss of hydraulic energy during operation of the transmission. One example hereof is given by EP 1 303 715 that discloses a sealing bush to be applied in the said hydraulic connection, which sealing bush is designed and dimensioned to minimise the leakage of hydraulic fluid to the surroundings. Alternatively, the Japanese patent publication JP 2010-002044A discloses a pulley design incorporating a hydraulic valve between the cylinder chamber and the said hydraulic connection. Further examples are given by WO2012/131965A1 and WO03/106866A2 that both teach provide a seal between the axially moveable pulley disc and the pulley shaft to prevent or at least limit the leakage of fluid from the cylinder chamber of the pulley.

In the pulley design according to JP 2010-002044A the hydraulic connection between the external source and the rotating cylinder chamber is used, i.e. is pressurized, only at the time of the actual supply or the actual discharge of hydraulic fluid to or, respectively, from the cylinder chamber. As a result, the leakage of hydraulic fluid from the hydraulic connection is reduced, as it occurs only when it is pressurised, i.e. when hydraulic fluid is actually exchanged between the cylinder chamber and the said external pressure source. Depending on the use the transmission, no such exchange is required for shorter or longer time intervals, thus reducing the leakage flow, at least on average. The known pulley valve is normally closed under the influence of the pressure level prevailing in the cylinder chamber, but can be opened by controlling the pressure level in the hydraulic connection to above such cylinder pressure and, thus, to allow the flow of hydraulic fluid in to the cylinder chamber and/or to increase the cylinder pressure. Furthermore, the known pulley valve is provided with an actuator that can be hydraulically activated to open the pulley valve against the cylinder pressure and, thus, to allow the flow of hydraulic fluid out of the cylinder chamber and/or to decrease the cylinder pressure.

With the latter, known pulley design the leakage of hydraulic fluid can be reduced relative to more conventional pulley designs, at least on average during operation of the transmission. In fact, the less often the hydraulic connection between the external source and the rotating cylinder chamber is pressurised -by the opening of the pulley valve- the more effective the leakage reduction realised by the known pulley design will be. It is an object of the present disclosure to limit the instances of the pressurisation of the said hydraulic connection during operation.

According to the present disclosure one reason for opening the hydraulic connection between the external source and the rotating cylinder chamber is to compensate for the loss of hydraulic pressure in the cylinder chamber. Further according to the present disclosure, such pressure loss is inherent to the known pulley design, because a radial clearance is present between the sleeve of the axially moveable pulley disc and the pulley shaft to allow the relative axial movement there between.

According to the present disclosure a hydraulic seal is provided between the piston of the piston/cylinder-assembly and the sleeve of the axially moveable pulley disc, in particular the radially outer surface thereof. By this hydraulic seal a loss of hydraulic fluid from the cylinder chamber via the clearance between the sleeve of the axially moveable pulley disc and the pulley shaft is avoided by the said clearance being completely excluded from, i.e. not being a part of, nor in hydraulic communication with the cylinder chamber. Hereby, a loss of cylinder pressure is favourably reduced in accordance with the object underlying the present disclosure.

The above-described basic features of the present disclosure will now be elucidated by way of example with reference to the accompanying figures.
Figure 1 is a symbolic representation of a known continuously variable transmission with two hydraulically adjustable pulleys, a drive belt and an electro-hydraulic control system 6.
Figure 2 schematically illustrates the basic design of the known hydraulically adjustable pulley in cross-section.
Figure 3 schematically illustrates a not claimed adjustable pulley in cross-section;
Figure 4 schematically illustrates a first embodiment of the adjustable pulley according to the present disclosure in cross-section;
Figure 5 schematically illustrates a second embodiment of the adjustable pulley according to the present disclosure in cross-section;
Figure 6 schematically illustrates a first not claimed embodiment of the electro-hydraulic control system according to the present disclosure for operating the hydraulically adjustable pulley; and
Figure 7 schematically illustrates a second not claimed embodiment of the electro-hydraulic control system according to the present disclosure for operating the hydraulically adjustable pulley.

In the figures, identical references relate to corresponding technical functions or structures, as the case may be.

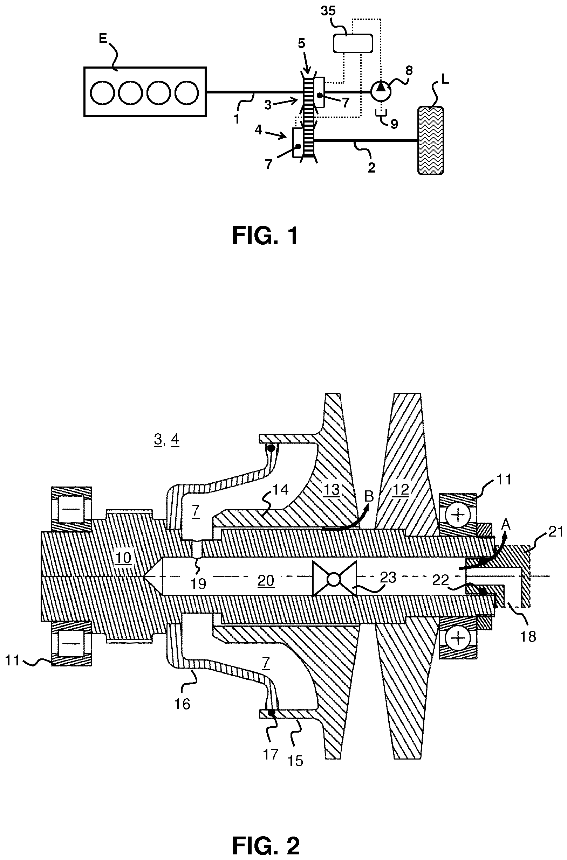

In figure 1 the known continuously variable transmission is depicted with an input or primary shaft 1 and with an output or secondary shaft 2. The known transmission is intended to be incorporated between an engine E and a load L for varying the transmission speed ratio there between within a continuous range of possible speed ratios.

The known transmission includes two hydraulically adjustable pulleys 3 and 4, i.e. both a primary, i.e. driving pulley 3 to be driven by the engine E via the transmission input shaft 2 and a secondary, i.e. driven pulley 4 to drive a load L, in particular the driven wheels of a motor vehicle. A drive belt 5, such as a metal push belt, is wrapped around and in frictional contact with the pulleys 3, 4. An electro-hydraulic control system is provided to hydraulically adjust the pulleys 3, 4 by way of controlling the hydraulic pressure levels in a cylinder chamber 7 of a piston/cylinder-assembly of each respective pulley 3, 4, in particular to control the transmission speed ratio and the friction between the drive belt 5 and the pulleys 3, 4. Hereto the control system of the known transmission includes at least a pump 8, for the supply of a flow of pressurised hydraulic fluid from a reservoir of hydraulic fluid 9, and a valve system 35.

The basic design of the hydraulically adjustable pulleys 3 and 4 is illustrated in more detail in Figure 2. In figure 2 the known pulley 3, 4 is shown to comprise a pulley shaft 10 rotatably born by bearings 11 and provided with two (frusto-)conical discs 12 and 13. A first pulley disc 12 is immovably fixed to, possibly integral with the pulley shaft 10. A second pulley disc 13 is fitted axially displaceable, i.e. moveable on the pulley shaft 10 by being provided with a sleeve 14 that is fitted on and around the pulley shaft with a radial clearance. The moveable pulley disc 13 and its sleeve 14 are typically locked relative to the pulley shaft 10 in rotational direction by means of a spline connection (not shown). The moveable pulley disc 13 can be moved or at least urged toward the other, fixed pulley disc 12 by exerting a hydraulic pressure in a cylinder chamber 7 of a piston/ cylinder-assembly 15, 16 of the respective pulley 3, 4 and whereof a cylinder 15 is fixed to the moveable pulley disc 13 and a piston 16 is fixed to the pulley shaft 10. Between the piston 16 and the cylinder 15 a sealing ring 17 is provided.

The cylinder chamber 7 is connected to hydraulic line 18 of the electro-hydraulic control system 6 that are external to the pulley 3, 4, via a radial bore 19 of the pulley shaft 10 linking up to an axial bore 20 thereof. A hydraulic connection 21 is provided between the axial bore 20 of the rotatable pulley shaft 10 and the non-rotating hydraulic line 18 external to the pulley 3, 4. In the shown example, the hydraulic connection 21 includes a cylindrically shaped section that is inserted in the said axial shaft bore 20 and a sealing ring 22 arranged on and around the outer circumference of the said cylindrically shaped section.

It is known that the hydraulic connection 21 between the axial bore 20 of the rotating pulley shaft 10 and the stationary hydraulic line 18 is prone to leakage of hydraulic fluid, as illustrated by the arrow A in figure 2. In order to minimise such leakage that is detrimental to the efficiency of the transmission as a whole, it has been proposed in the art to provide the pulley 3, 4 with a valve 23 that is designed and arranged to close to when no flow of hydraulic fluid to or from the cylinder chamber 7 is required, whereby the hydraulic line 18 and hence the hydraulic connection 21 can be depressurised and the said detrimental leakage can be reduced, at least on average during operation of the transmission.

According to the present disclosure, in practice the pulley valve 23 is open and the hydraulic connection 21 is pressurized quite frequently during operation, thus limiting the effectiveness of the pulley valve 23 in terms of the said leakage reduction and/or efficiency improvement that can be realised therewith. Further according to the present invention, this frequent opening of the pulley valve 23 is, in part, required to compensate for the leakage of hydraulic fluid from the cylinder chamber 7 via the clearance between the sleeve 14 of the axially moveable pulley disc 13 and the pulley shaft 10, as illustrated by the arrow B in figure 2. Although this latter leakage flow B is comparatively small, it does cause the cylinder pressure to drop when the pulley valve 23 is closed. Hence, the pulley valve 23 is opened and the hydraulic connection 21 is pressurised considerably more often than would be expected solely for changing the speed ratio of the transmission and/or adjusting the pulley/drive belt-friction.

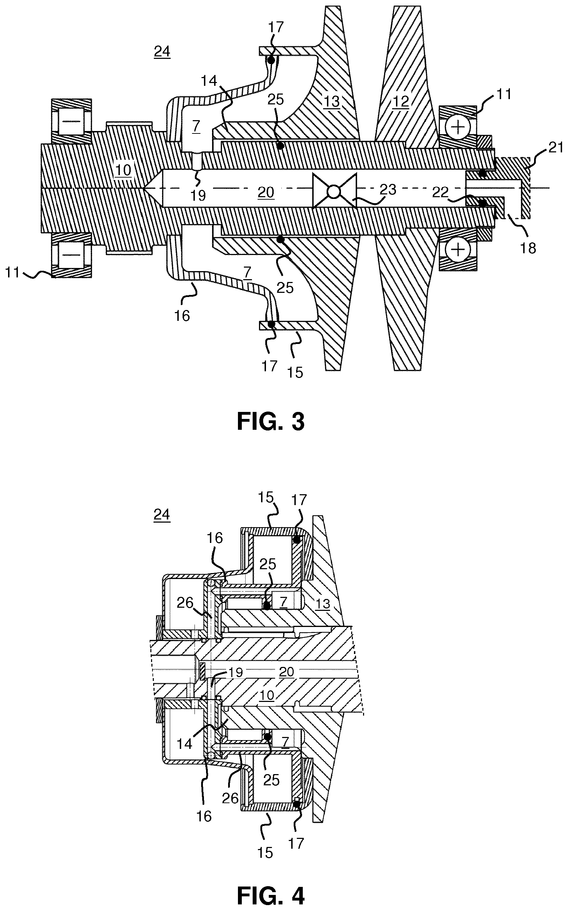

In figure 3 a first not claimed solution for improving the known pulley design in accordance with the present disclosure is illustrated. The novel pulley 24 shown in figure 3 corresponds largely with the known pulley 3, 4 of figure 2, however, a further sealing ring 25 is included therein between the sleeve 14 of the axially moveable pulley disc 13 and the pulley shaft 10. This further sealing ring 25 bridges the clearance between such sleeve 14 and shaft 10 and thus favourably prevents, or at least reduces the leakage of hydraulic fluid from the cylinder chamber 7 via such clearance. As a result, the cylinder pressure can be maintained longer and the pulley valve 23 needs to be opened and the hydraulic connection 21 pressurised for (re-)pressurisation of the cylinder chamber 7 favourably less frequently in comparison with the prior art.

In figure 4 a second solution for improving the known pulley design is illustrated. In this second embodiment of the pulley 24 according to the present disclosure, the further sealing ring 25 is included between the sleeve 14 of the axially moveable pulley disc 13 and the piston 16 of the piston/ cylinder-assembly 15, 16. Also in this second embodiment and in order to provide a hydraulic connection between the cylinder chamber 7 and the radial bore 19 of the pulley shaft 10, a channel 26 for hydraulic fluid is incorporated in the piston 16. One end of such piston channel 26 opens to the cylinder chamber 7 and the other end opens to the said radial bore 19.

By the further sealing ring 25 in this second embodiment, the clearance between the sleeve 14 of the axially moveable pulley disc 13 and the pulley shaft 10 is favourably excluded from the cylinder chamber 7, thus preventing or at least reducing the leakage of hydraulic fluid from the cylinder chamber 7 via such clearance. As a result, the cylinder pressure can be maintained longer and the pulley valve 23 needs to be opened and the hydraulic connection 21 pressurised for (re-)pressurisation of the cylinder chamber 7 favourably less frequently in comparison with the prior art.

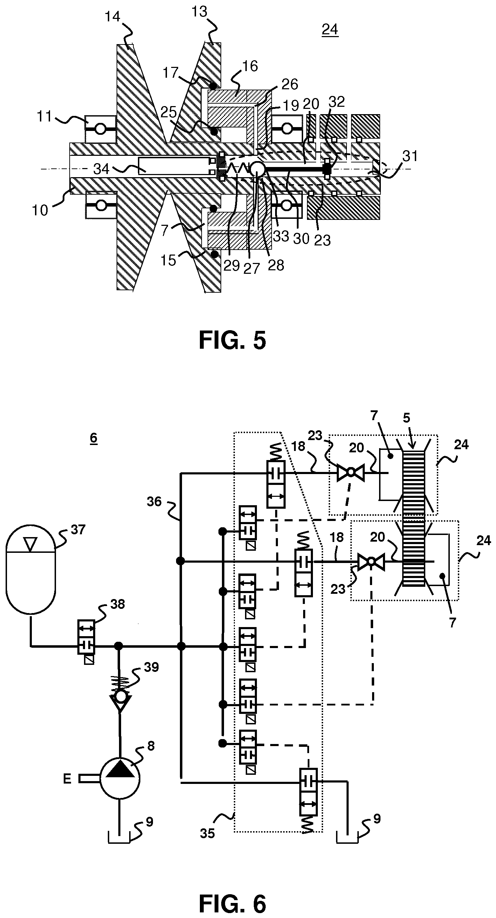

In figure 5 a third solution for improving the known pulley design is illustrated. In this third embodiment of the pulley 24 according to the present disclosure, the cylinder chamber 7 is embodied by an annular recess provided in the axially moveable pulley disc 13. In this third embodiment the axially moveable pulley disc 13 itself embodies the cylinder 15 of the piston the piston/cylinder-assembly 15, 16. The piston 16 of the piston the piston/cylinder-assembly 15, 16 is inserted in the said recess and is sealed-off on its radially outer edge by the sealing ring 17 and on its radially inner edge by the further sealing ring 25. Furthermore and similar to the second embodiment of the pulley 24, the piston 16 is provided with the internal piston channel 26 for hydraulically connecting the cylinder chamber 7 to the radial bore 19 of the pulley shaft 10.

Further according to the present disclosure, the design and/or operation of the known pulley valve 23 as such can be improved upon in the following manner and with reference to figure 5. According to the present disclosure, the pulley valve 23 is embodied as a non-return or check valve 23, whereof the valve lid 27 is held closed, i.e. is pressed into its seat 28, by the cylinder pressure. Preferably, but not necessarily, the valve lid 27 is additionally held closed by a spring 29, as is illustrated in figure 5. In this particular arrangement, the check valve 23 can be actively controlled and opened against the cylinder pressure by a push rod 30 under the influence of a valve control pressure exerted in a valve control cylinder 31. Hereto the valve control pressure acts on a first, piston-type distal end 32 of the push rod 30, whereas the opposite, second distal end 33 of the push rod 30 either represents the valve lid 27, or at least engages it, which latter arrangement is illustrated in figure 5.

According to the present disclosure, the valve control pressure is exerted in the valve control cylinder 31, not only for opening the check valve 23 to decrease the cylinder pressure by allowing hydraulic fluid to flow out of the cylinder chamber 7, but also for opening the check valve 23 to increase the cylinder pressure by allowing sufficiently pressurised hydraulic fluid to flow from the hydraulic line 18 into the cylinder chamber 7. In this latter arrangement, a rapid supply of hydraulic fluid to the cylinder chamber 7 can be favourably enabled under all circumstances, i.e. also when the overpressure in the hydraulic line 18 relative to the (pressure in the) cylinder chamber 7 is comparatively small. In these latter circumstances the check valve 23 is fully opened under the influence of the valve control pressure in the valve control cylinder 31.

Further according to the present disclosure and as illustrated in figure 5, a pressure sensor 34 is included to detect the cylinder pressure, i.e. the pressure in the cylinder chamber 7. By this pressure sensor 34 the cylinder pressure can be measured also when the pulley valve 23 is closed and the hydraulic line 18 is rendered pressureless. The pressure sensor 34 can be located external to the pulley 24, however, in that case a further hydraulic connection between the rotating cylinder chamber 7 and the stationary pressure sensor 34 is required. Even though this further hydraulic connection can be very small, it may still give rise to the leakage of hydraulic fluid. Therefore, in accordance with the present disclosure and as illustrated in figure 5, the pressure sensor 34 is preferably integrated in the pulley 24.

The hydraulically adjustable pulley 24 according to the present disclosure is ultimately suited to be deployed in combination with a specific type of electro-hydraulic control system 6, which preferred type of electro-hydraulic control system 6 is depicted in figure 6. As mentioned hereinabove, the control system 6 includes a pump 8 that generates a flow of pressurised hydraulic fluid from a reservoir of hydraulic fluid 9 to a main line 36 of the control system 6 for the said hydraulic control of the known transmission during operation. Surplus pump flow and depressurised hydraulic fluid such as any leakage from the control system 6, is directed back to the reservoir 9. The valve system 35 of the control system 6 is provided and arranged to control the various hydraulic pressure levels in the transmission, such as a hydraulic pressure in the main line 36. Furthermore, the control system 6, in particular the valve system 35 thereof, is arranged to control the cylinder pressures in the pressure chambers 7 of the transmission pulleys 24 in the above-described manner by the use of the pulley valve 23.

In this particular electro-hydraulic control system 6, the pump 8 is driven by the engine E of the drive line or motor vehicle, wherein the transmission is applied. The flow of hydraulic medium generated by the pump 8 from the reservoir 9 to the main line 36, i.e. the pump flow, thus depends on the (rotation) speed of the engine E. Therefore, the surplus pump flow can be quite significant, especially at a high engine speed. Therefore and more in particular to optimise transmission efficiency, a small pump is preferable.

According to the present disclosure and in order to reduce the pump size that is minimally required for the operation of the transmission and thus to favourably increase transmission efficiency, a hydraulic accumulator 37 is included in the control system. The accumulator 37 is connected to the main line 36 via an adjustable accumulator valve 38. The accumulator 37 is charged by opening the accumulator valve 38, i.e. is filled with pressurised hydraulic fluid when a flow demand of the valve system 35 is lower than the pump flow and is discharged, also by opening the accumulator valve 38, when such flow demand is higher than the pump flow. It is noted that the said flow demand is typically low in the steady state operation of the transmission, whereas it is high when a change of the speed ratio of the transmission is effected by the control system 6.

It is further noted that the adjustable accumulator valve 38 that is capable of controlling the flow of hydraulic fluid between the main line 36 and the accumulator 37 may inherently show more leakage of hydraulic fluid during transmission operation than a switchable on/off-valve. Therefore, i.e. in order to minimise the loss of pressurised hydraulic fluid from the accumulator 37 and in accordance to the present disclosure, it is advisable to include a switchable on/off-valve in the control system 6, interposed between the accumulator 37 and the adjustable accumulator valve 38.

It is further noted that by the design of the pulley 24 in accordance with the present disclosure leakage from the cylinder chambers 7 is reduced, which already allow the pump size to be reduced in principle. However, in the conventional control system 6 this might not be possible after all, since in that case the pump size is not determined by the steady state flow demand of the transmission, but rather by flow demand in the dynamic, i.e. speed ratio changing, operation thereof. Therefore, in particular by combining such leakage optimised design of the pulley 24 with the above-discussed arrangement of the control system 6 with the accumulator 37, the full efficiency improvement potential thereof can be unlocked.

As is also illustrated in figure 6, a pump check valve 39 may be included between the main line 36 and the pump 8 to prevent the leakage of hydraulic fluid via the pump 8 to the reservoir 9 when the pump 8 is not in operation.

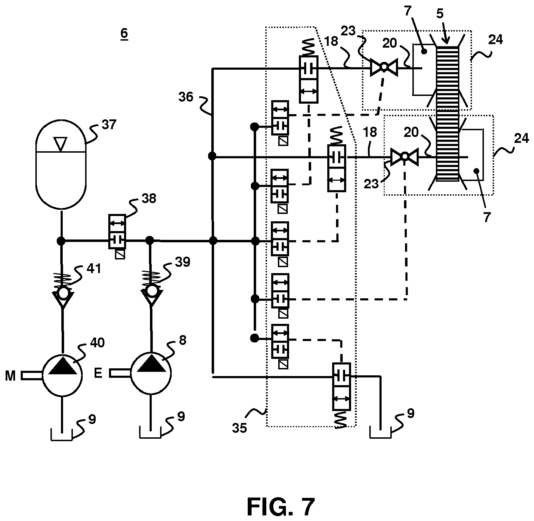

A more detailed embodiment of the electro-hydraulic control system 6 according to the present disclosure is illustrated in figure 7. In this particular embodiment a further pump 40 is included in the control system that is driven by an electric motor M rather than by the vehicle engine E. This further pump 40 is arranged to supply hydraulic fluid to and thus to charge the accumulator 37 independent of the first pump 8 and bypassing the main line 36. As is also illustrated in figure 7, a further pump check valve 41 may be included between the accumulator 37 and the further pump 40 to prevent the leakage of hydraulic fluid via the further pump 40 to the reservoir 9 when the further pump 40 is not in operation. In this latter embodiment of the control system 6 the accumulator 37 can be charged favourably independently from the first pump 8 and, moreover, the further pump 40 can support the first pump 8 in addition to the accumulator 37 when the flow demand is highest, the size of the first pump 8 can be reduced further relative to the above, first embodiment of the control system 6.

It is noted that this latter, more detailed embodiment of the electro-hydraulic control system 6 according to the present disclosure can, in principle, be simplified by disconnecting the first pump 8 that is driven by the vehicle engine E from the main line 36 (or even by completely removing the first pump 8 from the control system 6), which main line 36 is then supplied with pressurised hydraulic fluid from the accumulator 37 and/or from the further pump 40. This particular arrangement of the control system 6 can bring a further benefit in terms of transmission cost and/or efficiency, however, some applications thereof simply require more flow than the further pump 40 driven by the electric motor M can deliver economically.

It is further noted that, in principle, the above-described embodiments of the control system 6 can be applied in the continuously variable transmission independently of the pulley 24 in accordance with the present disclosure. However, an additional efficiency benefit was found to emerge specifically from the combined application of both the pulley 24 and the control system 6 in accordance with the present disclosure.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features.

## Claims

1. Hydraulically adjustable pulley device (24) for a continuously variable transmission with two pulleys (24) and with a drive belt (5) for transmitting drive power between an engine (E) and a load (L) at a variable transmission ratio, in particular in a drive line of a motor vehicle, which pulley (24) is provided with two pulley discs (12, 13) on a pulley shaft (10), whereof at least one pulley disc (13) is provided with a sleeve (14) extending in axial direction, which sleeve (14) is fitted around and is axially displaceable relative to the pulley shaft (10), whereto the pulley (24) comprises a piston/cylinder-assembly (15, 16) with a cylinder (15) that is part of the displaceable pulley disc (13), or that is at least attached thereto, with a piston (16) that is fixed to the pulley shaft (10), with a seal (17), such as a sealing ring (17), that is provided between the cylinder (15) and the piston (16), with a cylinder chamber (7) being defined between at least the cylinder (15), the piston (16) and the displaceable pulley disc (13), which cylinder chamber (7) is connected via hydraulic connection (21) to a hydraulic line (18) of the transmission, and with a further seal (25), such as a sealing ring (25), that is provided between the piston (16) of the piston/cylinder-assembly (15, 16) and the sleeve (14) of the displaceable pulley disc (13), which pulley (24) is further provided with a pulley valve (23) that is interposed between the cylinder chamber (7) and the hydraulic connection (21) for hydraulically connecting, respectively disconnecting the cylinder chamber (7) from the hydraulic connection (21), respectively the hydraulic line (18), **characterized in that** a piston channel (26) for hydraulic fluid is incorporated in the piston (16).

2. The pulley device (24) according to claim 1, whereof the pulley shaft (10) is at least provided with a bore (19) extending in radial direction for hydraulic fluid, **characterized in that** this radial bore (19) is hydraulically connected to the cylinder chamber (7) via the piston channel (26).

## Patentansprüche

1. Hydraulisch verstellbare Riemenscheibenvorrichtung (24) für ein stufenloses Getriebe mit zwei Riemenscheiben (24) und mit einem Antriebsriemen (5) zur Übertragung von Antriebskraft zwischen einem Motor (E) und einer Last (L) bei einem variablen Übersetzungsverhältnis, insbesondere in einem Antriebsstrang eines Kraftfahrzeugs, wobei die Riemenscheibe (24) mit zwei Riemenscheibentellern (12, 13) auf einer Riemenscheibenwelle (10) versehen ist, wobei mindestens ein Rollenscheibenteller (13) mit einer Hülse (14) versehen ist, die sich in einer Axialrichtung erstreckt, wobei die Hülse (14) um die Riemenscheibenwelle (10) herum angeordnet und bezüglich dieser axial verschiebbar ist, wobei die Riemenscheibe (24) eine Kolben/Zylinder-Anordnung (15, 16) mit einem Zylinder (15), der Teil des verschiebbaren Riemenscheibentellers (13) ist oder der zumindest daran befestigt ist, mit einem Kolben (16), der an der Riemenscheibenwelle (10) fixiert ist, mit einer Dichtung (17), wie zum Beispiel einem Dichtring (17), die zwischen dem Zylinder (15) und dem Kolben (16) vorgesehen ist, mit einer Zylinderkammer (7), die zwischen mindestens dem Zylinder (15), dem Kolben (16) und dem verschiebbaren Riemenscheibenteller (13) definiert ist, wobei die Zylinderkammer (7) über eine hydraulische Verbindung (21) mit einer Hydraulikleitung (18) des Getriebes verbunden ist, und mit einer weiteren Dichtung (25), wie zum Beispiel einem Dichtring (25), die zwischen dem Kolben (16) der Kolben/Zylinder-Anordnung (15, 16) und der Hülse (14) der verschiebbaren Riemenscheibe (13) vorgesehen ist, umfasst, wobei die Riemenscheibe (24) ferner mit einem Riemenscheibenventil (23) versehen ist, das zwischen der Zylinderkammer (7) und der hydraulischen Verbindung (21) angeordnet ist, um die Zylinderkammer (7) mit der hydraulischen Verbindung (21) bzw. der Hydraulikleitung (18) hydraulisch zu verbinden bzw. davon zu trennen, **dadurch gekennzeichnet, dass** ein Kolbenkanal (26) für Hydraulikfluid in dem Kolben (16) integriert ist.

2. Riemenscheibenvorrichtung (24) nach Anspruch 1, wobei die Riemenscheibenwelle (10) mindestens mit einer Bohrung (19) versehen ist, die sich in einer Radialrichtung für Hydraulikfluid erstreckt, **dadurch gekennzeichnet, dass** diese Radialbohrung (19) über den Kolbenkanal (26) mit der Zylinderkammer (7) hydraulisch verbunden ist.

## Revendications

1. Dispositif de poulie ajustable hydrauliquement (24) pour une transmission à variation continue comprenant deux poulies (24) et une courroie d'entraînement (5) pour transmettre une puissance d'entraînement entre un moteur (E) et une charge (L) avec un rapport de transmission variable, en particulier dans une chaîne cinématique d'un véhicule automobile, laquelle poulie (24) est pourvue de deux disques de poulie (12, 13) sur un arbre de poulie (10), dont au moins un disque de poulie (13) est pourvu d'un manchon (14) s'étendant dans la direction axiale, lequel manchon (14) est ajusté autour de l'arbre de poulie (10) et peut être déplacé axialement par rapport à celui-ci, la poulie (24) comprenant un ensemble cylindre-piston (15, 16) avec un cylindre (15) qui fait partie du disque de poulie déplaçable (13) ou qui est au moins attaché à celui-ci, avec un piston (16) qui est fixé à l'arbre de poulie (10), avec un joint (17), tel qu'une bague d'étanchéité (17), qui est prévu entre le cylindre (15) et le piston (16), avec une chambre de cylindre (7) définie entre au moins le cylindre (15), le piston (16) et le disque de poulie déplaçable (13), laquelle chambre de cylindre (7) est connectée par le biais d'une liaison hydraulique (21) à une ligne hydraulique (18) de la transmission, et avec un joint supplémentaire (25), tel qu'une bague d'étanchéité (25), qui est prévu entre le piston (16) de l'ensemble cylindre-piston (15, 16) et le manchon (14) du disque de poulie déplaçable (13), laquelle poulie (24) est en outre pourvue d'une valve de poulie (23) qui est interposée entre la chambre de cylindre (7) et la liaison hydraulique (21) pour connecter et déconnecter hydrauliquement la chambre de cylindre (7) par rapport à la liaison hydraulique (21), respectivement la ligne hydraulique (18), **caractérisé en ce qu'**un canal de piston (26) pour du fluide hydraulique est incorporé dans le piston (16) .

2. Dispositif de poulie (24) selon la revendication 1, dont l'arbre de poulie (10) est au moins pourvu d'un alésage (19) pour du fluide hydraulique s'étendant dans la direction radiale, **caractérisé en ce que** cet alésage radial (19) est connecté hydrauliquement à la chambre de cylindre (7) par le biais du canal de piston (26).
